# FASCICULE DE BREVET EUROPEEN

(11) **EP 4 051 477 B1**
(45) Date de publication et mention de la délivrance du brevet: **29.11.2023**
(21) Numéro de dépôt: 20807476.5
(22) Date de dépôt: 23.10.2020
(51) Int. Cl.: B29B 11/16, D03D 25/00, F01D 5/28, B29L 31/08

(54) **PREFORME FIBREUSE TISSEE POUR REALISER UNE AUBE DE SOUFFLANTE EN MATERIAU COMPOSITE**
WEBFASERVORFORM ZUR HERSTELLUNG EINER LÜFTERSCHAUFEL AUS VERBUNDWERKSTOFF
WOVEN FIBROUS PREFORM FOR MANUFACTURING A FAN BLADE MADE OF COMPOSITE MATERIAL

(30) Priorité: 29.10.2019 FR 1912137
(43) Date de publication de la demande: 07.09.2022
(73) Titulaire: SAFRAN, 75015 Paris (FR)
(72) Inventeur: MARCHAL, Yann, Didier, Simon, 77550 MOISSY-CRAMAYEL (FR); COUPE, Dominique, Marie, Christian, 77550 MOISSY-CRAMAYEL (FR)
(74) Mandataire: Cabinet Beau de Loménie
(86) Numéro de dépôt international: PCT/FR2020/051925
(87) Numéro de publication internationale: WO 2021/084194

(56) Documents cités:
- WO-A1-2019/097147
- DE-B3-102011 084 472

## Description

### Domaine Technique

La présente invention se rapporte au domaine général des pièces en matériau composite. Plus précisément, l'invention se rapporte à une préforme fibreuse pour fabriquer une aube de soufflante de turbomachine aéronautique.

### Technique antérieure

Dans le domaine des turbomachines aéronautiques, la diminution de la masse des pièces est une problématique majeure tant au niveau des coûts de fabrication de ces pièces, qu'au niveau de l'efficacité énergétique et environnementale des turbomachines. Cette problématique a entraîné rapidement le développement de pièces en matériaux composites pour remplacer les traditionnelles pièces métalliques dans différentes parties du turboréacteur.

De façon connue, une pièce en matériau composite peut être obtenue par réalisation d'une préforme fibreuse et densification de la préforme par une matrice. Selon l'application envisagée, la préforme peut être en fibres de verre, carbone ou céramique, et la matrice peut être en un matériau organique (polymère), en carbone ou en céramique.

Pour les pièces de forme relativement complexe, il est connu de réaliser une structure fibreuse ou ébauche en une seule pièce par tissage tridimensionnel (3D) ou multicouches et de mettre en forme la structure fibreuse pour obtenir une préforme fibreuse ayant une forme voisine de celle de la pièce à fabriquer.

Le document WO 2019/097147 A1 divulgue en figure 2 une préforme fibreuse destinée à former le renfort fibreux d'une aube de soufflante de turbomachine aéronautique en matériau composite à renfort fibreux densifié par une matrice, la préforme fibreuse étant en une seule pièce et étant obtenue par tissage tridimensionnel d'une pluralité de fils ou torons longitudinaux s'étendant dans une direction correspondant à la direction longitudinale de l'aube avec une pluralité de fils ou torons transversaux.

La soufflante d'une turbomachine aéronautique comprend des aubes montées sur un disque rotatif. Les aubes de la soufflante, qui présentent des dimensions importantes pour produire une grande partie de la poussée de la turbomachine, peuvent être exposées à des impacts d'objets de natures diverses (oiseaux, graviers, blocs de glace, sable, etc.), en plus de subir les contraintes mécaniques liées à la force centrifuge, ce qui peut les endommager.

Il existe toujours un besoin pour une aube de soufflante qui présente une tenue mécanique améliorée tout en conservant une masse réduite.

### Exposé de l'invention

A cet effet, l'invention propose une préforme fibreuse destinée à former le renfort fibreux d'une aube de soufflante de turbomachine aéronautique en matériau composite à renfort fibreux densifié par une matrice, la préforme fibreuse étant en une seule pièce et étant obtenue par tissage tridimensionnel d'une pluralité de fils ou torons longitudinaux s'étendant dans une direction correspondant à la direction longitudinale de l'aube avec une pluralité de fils ou torons transversaux, la préforme comprenant une partie de pied d'aube et une partie de pale d'aube s'étendant entre la partie de pied d'aube et une extrémité libre de la préforme fibreuse, caractérisée en ce que la partie de pale de la préforme présente une première zone qui comprend une première peau correspondant à une face intrados de l'aube, une deuxième peau correspondant à une face extrados de l'aube, et une portion de raidissement longitudinale s'étendant entre la première peau et la deuxième peau, et en ce que, dans un plan transversal de la première zone :
- des fils ou torons transversaux de la première peau et de la deuxième peau sont tissés par paires dans la première peau et dans la deuxième peau de part et d'autre de la portion de raidissement longitudinale,
- les fils ou torons d'au moins une première paire de fils ou torons transversaux de la première peau sont séparés en deux fils ou torons unitaires au niveau de la portion de raidissement longitudinale, lesdits fils ou torons unitaires étant tissés séparément avec des fils ou torons longitudinaux dans ladite portion,
- les fils ou torons d'au moins une deuxième paire de fils ou torons transversaux de la deuxième peau sont séparés en deux fils ou torons unitaires au niveau de la portion de raidissement longitudinale, lesdits fils ou torons unitaires étant tissés séparément avec des fils ou torons longitudinaux dans ladite portion, et
- au moins un fil ou toron de la première paire et au moins un fil ou toron de la deuxième paire se croisent au moins deux fois dans la portion de raidissement longitudinale.

La première zone de la préforme fibreuse définie ainsi deux espaces entre les deux peaux qui sont situés de part et d'autre de la portion de raidissement longitudinale et séparés par celle-ci. Dans l'aube de soufflante qui intégrera cette préforme en tant que renfort, ces deux espaces dans la préforme fibreuse permettent de former deux cavités ou évidements qui s'étendent généralement selon la direction longitudinale.

Par « tissage tridimensionnel », « tissage 3D », « tissage multicouches » on entend ici un mode de tissage par lequel certains au moins des fils de chaîne (ou fils longitudinaux) lient des fils de trame (ou fils transversaux) sur plusieurs couches de trame. Un tel tissage peut être réalisé dans un métier à tisser de type jacquard, de façon connue en soi.

La préforme fibreuse selon l'invention présente l'avantage d'être réalisable en une seule étape de tissage, et de présenter une première zone comprenant une portion de raidissement longitudinale qui servira, lorsque la préforme constitue le renfort fibreux d'une aube de soufflante en matériau composite, d'élément de raidissement le long de la direction longitudinale afin d'améliorer la tenue mécanique d'une partie de l'aube, notamment en cas d'impacts, et tout en réduisant sa masse. La première zone de la préforme fibreuse définie en effet deux espaces qui formeront des cavités ou évidements dans l'aube, lui conférant une masse réduite par rapport à une aube pleine.

La portion de raidissement longitudinale est formée à partir de paires de fils ou torons transversaux qui sont dédoublées (séparées) en fils ou torons unitaires tissés ensuite séparément avec des fils ou torons longitudinaux qui sont introduits au niveau de la portion de raidissement longitudinale. Par ce mode de tissage à partir de paires dédoublées, la portion de raidissement longitudinale est ainsi liée par tissage aux peaux, ce qui assure une bonne tenue de l'ensemble. En outre, il n'est pas nécessaire d'insérer des fils ou torons transversaux supplémentaires pour réaliser la portion de raidissement longitudinale, ce qui simplifie le tissage de la préforme. Le croisement de fils ou torons longitudinaux provenant de la première et de la deuxième peau permet d'assurer la liaison par tissage des peaux avec la portion de raidissement, tout en augmentant la tenue mécanique de l'ensemble.

Dans un exemple de réalisation, la première zone peut s'étendre selon la direction longitudinale sur une longueur inférieure ou égale à 75% de la hauteur de la préforme mesurée selon la direction longitudinale. Cette plage de longueur constitue un bon compromis entre une bonne tenue mécanique pour l'aube et une masse réduite.

Dans un exemple de réalisation, la première zone peut s'étendre dans une portion de la partie de pale située entre 50% de la hauteur de la préforme mesurée selon la direction longitudinale et l'extrémité libre de la préforme fibreuse. Cette disposition permet de positionner la première zone au niveau de la moitié supérieure de la préforme, où l'aube est le plus sujette aux efforts centrifuges et aux impacts d'objets.

Dans un exemple de réalisation, au moins une partie des fils ou torons longitudinaux présents dans la portion de raidissement longitudinale peut présenter un titre supérieur au titre des fils ou torons longitudinaux présents dans la première et la deuxième peau. Cette caractéristique permet d'augmenter la raideur de l'élément de raidissement qui sera formé à partir de la portion de raidissement lorsque la préforme sera densifiée pour former une pièce en matériau composite. Par exemple le titre des fils ou torons longitudinaux dans les peaux peut être inférieur ou égal à 24k, et le titre des fils ou torons longitudinaux dans la portion de raidissement peut être égal à 48k.

Dans un exemple de réalisation, les fils ou torons longitudinaux peuvent être des fils ou torons de chaîne et les fils ou torons transversaux sont des fils ou torons de trame.

Dans un exemple de réalisation, un matériau de remplissage peut être présent entre la première peau et la deuxième peau dans la première zone. Le matériau de remplissage peut être de la mousse. Le matériau de remplissage est localisé dans les deux espaces définis dans la première zone, et sera ainsi présent dans les cavités ou évidements de l'aube. Ce matériau de remplissage permet à la préforme de conserver sa forme malgré la présente de la première zone sans augmenter outre mesure sa masse.

Dans un exemple de réalisation, la partie de pale peut présenter une deuxième zone au voisinage de l'extrémité libre de la préforme comprenant une pluralité de couches de tissus unidirectionnels de fils ou torons transversaux. Cette deuxième zone peut s'étendre selon la direction longitudinale sur une longueur inférieure ou égale à 25% de la hauteur de la préforme mesurée selon la direction longitudinale. Cette deuxième zone peut s'étendre dans une portion de la partie de pale située entre 80% de la hauteur de la préforme mesurée selon la direction longitudinale et l'extrémité libre de la préforme fibreuse. Cette deuxième zone présente une raideur plus importante que le reste de la préforme dans la direction transversale, ce qui améliore la tenue mécanique de l'aube à proximité de son extrémité libre laquelle est plus sensible aux impacts d'objets.

L'invention a également pour objet une aube de soufflante de turbomachine aéronautique en matériau composite à renfort fibreux densifié par une matrice comprenant une préforme fibreuse telle que celle décrite ci-avant en tant que renfort fibreux, l'aube présentant une portion correspondant à la première zone de la préforme fibreuse, ladite portion comprenant deux cavités séparées par un élément de raidissement longitudinal correspondant à la portion de raidissement de la plateforme. Un matériau de remplissage peut être présent dans lesdites cavités.

L'invention a enfin pour objet un module de soufflante de turbomachine aéronautique, comprenant un disque de soufflante et une pluralité d'aubes de soufflante telles que celle présentée ci-dessus montées sur le disque de soufflante.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig. 1] La figure 1 est une vue très schématique en coupe longitudinale d'une turbomachine aéronautique.
[Fig. 2] La figure 2 montre schématiquement une aube de soufflante de turbomachine aéronautique en matériau composite.
[Fig. 3] La figure 3 est une vue schématique d'une préforme fibreuse d'aube de soufflante selon un mode de réalisation de l'invention.
[Fig. 4] La figure 4 montre un exemple schématique d'armure de tissage selon le plan transversal IV de la préforme fibreuse de la figure 3.
[Fig. 5] La figure 5 montre un exemple schématique d'armure de tissage selon le plan transversal V de la préforme fibreuse de la figure 3.
[Fig. 6] La figure 6 montre un exemple schématique d'armure de tissage selon le plan transversal VI de la préforme fibreuse de la figure 3.

### Description des modes de réalisation

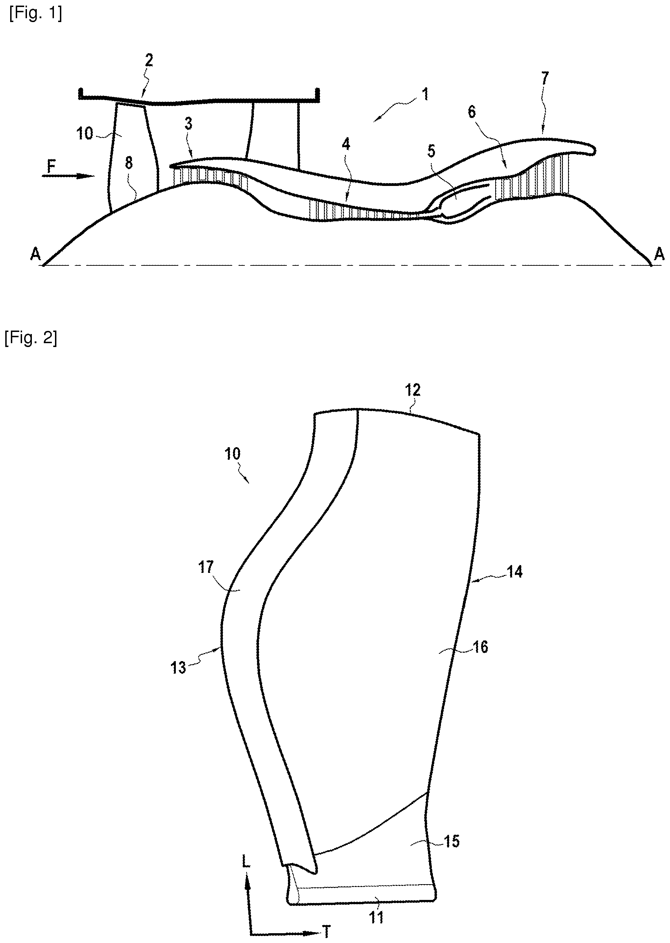

La figure 1 montre une vue schématique en coupe longitudinale d'une turbomachine aéronautique 1, ici un turboréacteur à double flux centré sur l'axe A-A. Elle comporte, d'amont en aval dans le sens F d'écoulement du flux gazeux dans la turbomachine : une soufflante 2, un compresseur basse pression 3, un compresseur haute pression 4, une chambre de combustion 5, une turbine haute pression 6, et une turbine basse pression 7.

La soufflante 2 comprend notamment un disque rotatif 8 sur lequel sont montées une pluralité d'aubes de soufflante 10, dont une est représentée sur la figure 2.

L'aube de soufflante 10 s'étend selon une direction longitudinale L entre un pied 11 et une extrémité libre 12, et selon une direction transversale T entre un bord d'attaque 13 et un bord de fuite 14. Entre le pied 11 et l'extrémité 12, l'aube comporte une échasse 15 et un corps de pale 16 situé entre l'échasse 15 et l'extrémité 12. L'aube de soufflante 10 est en matériau composite comprenant un renfort fibreux densifié par une matrice.

Dans l'exemple illustré, l'aube 10 présente un bord d'attaque métallique 17, sous la forme par exemple d'un clinquant métallique. Un tel bord d'attaque métallique 17 peut être fixé après avoir obtenu l'aube 10, ou être intégré à l'aube 10 au cours de son procédé de fabrication, de façon connue.

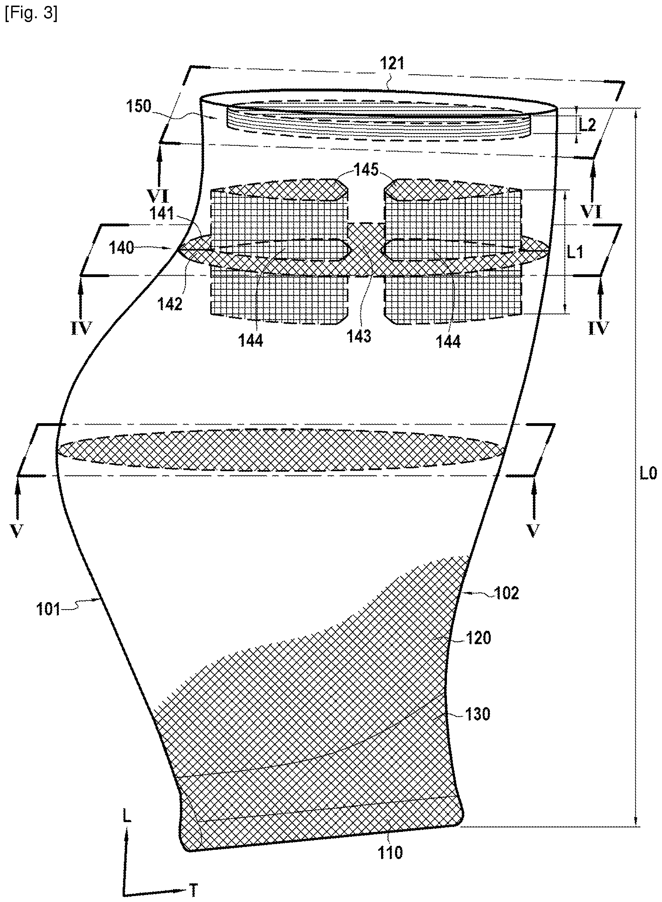

La figure 3 montre une vue schématique d'un exemple de préforme fibreuse 100 destinée à former le renfort fibreux de l'aube 10. Cette préforme fibreuse 100 peut être obtenue par exemple par tissage tridimensionnel dans un métier à tisser de type Jacquard d'une ébauche fibreuse et découpe des fils excédentaires de l'ébauche fibreuse tissée.

La préforme fibreuse 100 peut présenter généralement un tissage tridimensionnel, et comprendre par exemple majoritairement une armure interlock ou multicouches. Par « armure interlock », il faut comprendre une armure de tissage tridimensionnel dont chaque couche de fils de chaîne lie plusieurs couches de fils de trame avec tous les fils de la même colonne de chaîne ayant le même mouvement dans le plan de l'armure. Le document WO2006/136755 décrit la réalisation de telles armures de tissage. Comme il sera décrit ultérieurement, cette préforme fibreuse pourra être densifiée pour obtenir une aube de soufflante 10 telle que celle illustrée de la figure 2.

La préforme fibreuse 100 s'étend selon une direction longitudinale L entre une partie de pied d'aube 110 et une partie de pale d'aube 120. La préforme 100 présente une extrémité libre 121 située à l'extrémité de la partie de pale d'aube 120 opposée à la partie de pied 110. Une partie d'échasse d'aube 130 est présente entre la partie de pied d'aube 110 et la partie de pale d'aube 120. De façon générale, la partie de pied d'aube 110 est plus épaisse que la partie d'échasse 130 d'aube, et l'épaisseur de la partie de pale d'aube 120 est variable. La préforme fibreuse 100 s'étend selon une direction transversale T entre un premier bord 101 destiné à former le bord d'attaque de l'aube et un deuxième bord 102 destiné à former le bord de fuite de l'aube.

Dans l'exemple illustré, la direction longitudinale L correspond également à la direction générale selon laquelle s'étendent les fils ou torons de chaîne dans la préforme fibreuse 100, alors que la direction transversale T correspond à la direction générale selon laquelle s'étendent les fils ou torons de trame. On notera que, dans tout le texte, chaîne et trame peuvent être intervertis.

Conformément à l'invention, la partie de pale 120 de la préforme 100 comprend une première zone 140 qui présente une armure de tissage particulière. La première zone 140 s'étend ici sur une partie seulement de la partie de pale 120, et constitue une portion intermédiaire de la partie de pale 120. Dans cette première zone 140, la préforme 100 comprend une première peau 141 correspondant à une face intrados de l'aube 10 et une deuxième peau 142 correspondant à une face extrados de l'aube 10 qui sont reliées entre elles par une portion de raidissement longitudinale 143. La portion de raidissement longitudinale 143 prend la forme d'une poutre qui s'étend selon la direction longitudinale L. Dans cette première zone 140, les extrémités des peaux 141 et 142 sont jointes au niveau des bords 141 et 102 de sorte que la préforme 100 présente deux cavités 144 ou évidements qui sont séparés par la portion de raidissement longitudinale 143. Un matériau de remplissage 145 tel que de la mousse peut être introduit dans les cavités 144 afin de permettre à la préforme 100 de conserver sa forme au cours du procédé de densification qui sera décrit ultérieurement, tout en conservant une masse réduite. De part et d'autre de la première zone 140 selon la direction longitudinale, la préforme 100 présente généralement un tissage tridimensionnel classique.

La première zone 140 peut s'étendre selon la direction longitudinale L sur une longueur L1 inférieure ou égale à 75% de la hauteur L0 de la préforme mesurée selon la direction longitudinale L. En outre, la première zone 140 est préférentiellement située dans une portion de la partie de pale 120 située entre 50% de la hauteur L0 de la préforme mesurée selon la direction longitudinale et l'extrémité libre 121 de la préforme fibreuse.

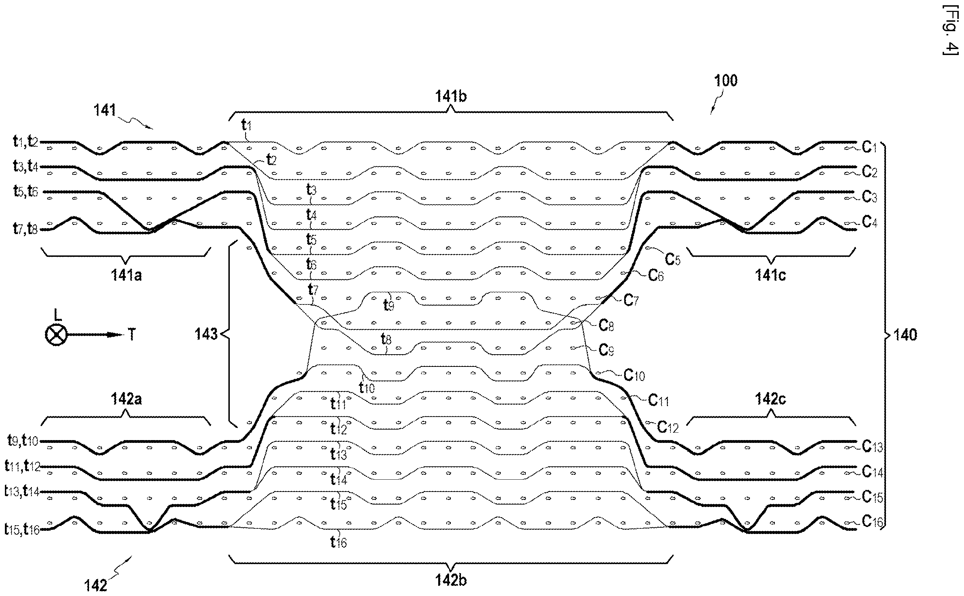

La figure 4 montre schématiquement une armure de tissage dans un plan transversal de la préforme 100 au niveau du plan IV de la figure 3. Cette armure de tissage est reproduite sur l'ensemble de la première zone 140 de la préforme 100.

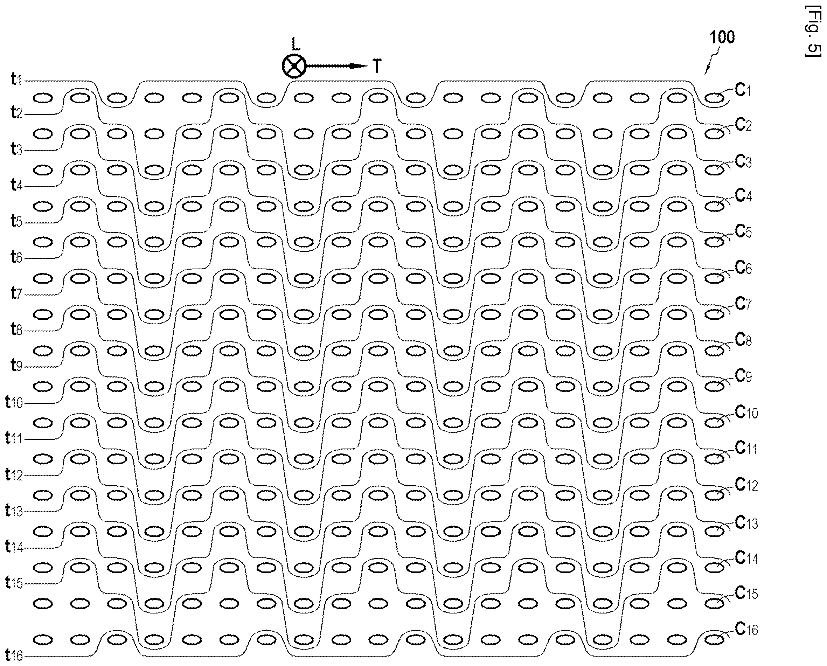

Sur la figure 5 sont représentées des couches c₁-c₁₆ de fils ou torons de chaîne (longitudinaux) et les trajets de fils ou torons de trame t₁-t₁₆ (transversaux). Par souci de simplification, on parlera de fils de chaîne et de fils de trame dans la suite de la description.

La première peau 141 comprend ici quatre couches de fils de chaîne c₁-c₄, qui sont liées par des fils de trame t₁-t₈. La deuxième peau 142 comprend de manière similaire quatre couches de fils de chaîne c₁₃-c₁₆, qui sont liées par des fils de trame t₉-t₁₆. La portion de raidissement 143 comprend quant à elle huit couches de fils de chaîne c₅-c₁₂. On notera qu'il y a, dans la première peau 141 et dans la deuxième peau 142, deux fois plus de fils de trame que de couches de fils de chaîne car les fils de trame sont tissés par paires dans certaines parties des peaux 141 et 142.

La première peau 110 peut être divisée en trois parties 141a, 141b et 141c le long de la direction transversale T. La première partie 141a et la troisième partie 141c constituent des parties libres de la première peau 110 qui sont situées de part et d'autre de la portion de raidissement 143. Dans la première 141a et dans la troisième partie 141c, les fils de trame sont tissés par paires. Ainsi, par exemple, les fils de trame t₁ et t₂ sont tissés ensemble dans la partie 141a et dans la partie 141c, c'est-à-dire qu'ils suivent le même trajet. En particulier, dans les parties 141a et 141c, le tissage peut être de type interlock. On notera que sur la surface de la première peau 141 opposée à la portion de raidissement 143, et dans les parties 141a et 141c le tissage des fils de trame t₁ et t₂ est bidimensionnel de façon à conférer un état de surface lisse à la pièce en matériau composite.

De manière similaire, la deuxième peau 142 peut être divisée en trois parties 142a, 142b et 142c le long de la direction transversale T. La première partie 142a et la troisième partie 142c constituent des parties libres de la deuxième peau 142 qui sont situées de part et d'autre de la portion de raidissement 143. Dans la première 142a et dans la troisième partie 142c, les fils de trame sont tissés par paires. Ainsi, par exemple, les fils de trame t₁₅ et t₁₆ sont tissés ensemble dans la partie 142a et dans la partie 142c, c'est-à-dire qu'ils suivent le même trajet. En particulier, dans les parties 142a et 142c, le tissage peut être de type interlock. On notera que sur la surface de la deuxième peau 142 opposée à la portion de raidissement 143, et dans les parties 142a et 142c le tissage des fils de trame t₁₅ et t₁₆ est bidimensionnel de façon à conférer un état de surface lisse à la pièce en matériau composite.

Dans l'exemple illustré, les fils de trame de chaque paire de fils de trame t₁-t₂, t₃-t₄, t₅-t₆ et t₇-t₈ sont séparés en deux fils unitaires au niveau de la portion de raidissement 143, et généralement de part et d'autre de celle-ci. Une fois séparés, les fils unitaires sont tissés séparément avec des fils de chaîne dans la partie 141b et dans la portion de raidissement 143. Par « tissés séparément » on entend que les fils ne suivent plus le même trajet. La séparation des paires (ou dédoublement des paires) permet ainsi de doubler le nombre de fils de trame disponibles au niveau de la portion de raidissement longitudinale pour pouvoir tisser celle-ci avec des couches de fils de chaîne supplémentaires. Ainsi, les fils de trame t₁ à t₄ sont tissés respectivement avec les couches de fils de chaîne c₁ à c₄ dans la partie 141b de la première peau 141, alors que les fils de trame t₅ à t₈ sont tissés respectivement avec les couches de fils de chaîne c₅, c₆, c₈ et c₉ dans la portion de raidissement 143. Une partie des fils de trame unitaires de la première peau 141 sont tissés avec des couches de fils de chaîne de la première peau 141, et une autre partie des fils de trame unitaires de la première peau 141 sont tissés avec des couches de fils de chaîne de la portion de raidissement 143.

Dans l'exemple illustré, les fils de trame de chaque paire de fils de trame t₉-t₁₀, t₁₁-t₁₂, t₁₃-t₁₄ et t₁₅-t₁₆ sont séparés en deux fils unitaires au niveau de la portion de raidissement 143, et généralement de part et d'autre de celle-ci. Une fois séparés, les fils unitaires sont tissés séparément avec des fils de chaîne dans la partie 142b et dans la portion de raidissement 143. Ainsi, les fils de trame t₁₃ à t₁₆ sont tissés respectivement avec les couches de fils de chaîne c₁₃ à c₁₆ dans la partie 142b deuxième peau 142, alors que les fils de trame t₉ à t₁₂ sont tissés respectivement avec les couches de fils de chaîne c₇, c₁₀ à c₁₂ dans la portion de raidissement 143. Une partie des fils de trame unitaires de la deuxième peau 142 sont tissés avec des couches de fils de chaîne de la deuxième peau 142, et une autre partie des fils de trame unitaires de la deuxième peau 142 sont tissés avec des couches de fils de chaîne de la portion de raidissement 143.

Dans l'exemple illustré, les fils de trame unitaires obtenus par dédoublement des paires de fils de trame sont tissés chacun avec une seule couche de fils de chaîne différente dans les parties 141b et 142b et dans la portion de raidissement 143.

Dans l'exemple illustré, les fils de trame unitaires t₇ et t₈ provenant de la première portion 141 croisent le fil de trame t₉ provenant de la deuxième portion 142 dans la portion de raidissement 143. Ce croisement permet ici que les couches de fils de chaîne c₇, c₈ et c₉ soient liées à la première peau 141 par les fils de trame t₇ et t₈, et à la deuxième peau 142 par le fil de trame t₉. Bien entendu, d'autres armures de tissage peuvent être envisagées en conservant le croisement, au moins deux fois, de fils de trame provenant de la première 141 et de la deuxième 142 peau dans la portion de raidissement 143 afin d'assurer la cohésion de la préforme 100. Ainsi, dans cet exemple, une partie seulement des fils de trame unitaires provenant de la première peau 141 croise une partie seulement des fils de trame unitaires provenant de la deuxième peau 142 ; les autres fils de trame unitaires étant tissés avec des couches de fils de chaîne différentes sans se croiser entre eux.

Dans l'exemple illustré, il y a quatre fils de chaîne par colonne dans la première peau 141 et dans la deuxième peau 142, soit huit fils par colonne au niveau des parties libres 141a, 142a, 141c, 142c des peaux. Le nombre de fils de chaînes d'une même colonne de chaîne est ici progressivement augmenté pour atteindre seize fils de chaîne par colonne dans la préforme au niveau de la portion de raidissement 143. Dans cet exemple, les fils de trame des paires de fils de trame sont séparés au niveau de colonnes de chaîne différentes, c'est-à-dire à des emplacements différents le long de la direction transversale T, cela permet une introduction progressive des nouveaux fils de chaîne et un tissage plus aisé.

II peut être avantageux que le titre (c'est-à-dire nombre de filaments moyen constituant les fils) des fils de chaîne des couches c₅ à c₁₂ dans la portion de raidissement 143 soit supérieur au titre des fils de chaîne des couches c₁ à c₄ et c₁₃ à c₁₆ dans les peau 141 et 142, afin d'augmenter la fonction de raidissement de la portion de raidissement 143 dans une pièce en matériau composite.

De part et d'autre de la première zone 141 selon la direction longitudinale, l'armure de tissage est illustrée schématiquement sur la figure 5 (elle correspond par exemple au plan transversal V de la figure 3). Cette armure représente un tissage de type interlock classique où chaque fil de trame est tissé ave des fils de chaîne de trois couches différentes. La préforme 100 présente en outre toujours un tissage bidimensionnel en surface, c'est-à-dire sur les faces de la préforme 100 correspondant aux faces intrados et extrados de l'aube 10. Les fils de trame t₁-t₁₆ sont ici tissés séparément avec les fils de chaîne des couches c₁-c₁₆.

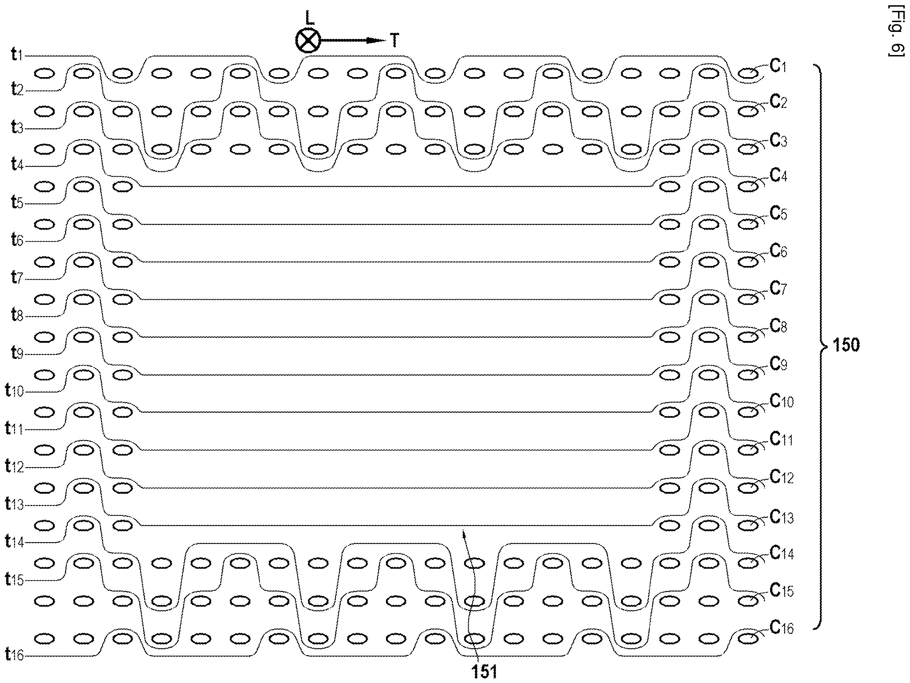

La préforme 100 peut en outre comprendre une deuxième zone 150 située au voisinage de l'extrémité libre 121 de la préforme 100 dans la partie de pale 120, qui permet d'augmenter la tenue de l'aube 10 en cas d'impact avec un objet. La deuxième zone 150 présente une pluralité de couches de tissus unidirectionnels de fils de trame. Plus précisément, la figure 6 illustre très schématiquement une armure de tissage au niveau du plan transversal VI (figure 3) de la deuxième zone 150. On peut voir que dans une partie 151 localisée au coeur de la préforme 100, les fils de trame t₄ à t₁₃ ne sont pas tissés avec des fils de chaîne (qui ont été sortis de la préforme 100 de part et d'autre de la deuxième zone 150) et s'étendent tous parallèlement selon la direction transversale T, formant une couche de tissu unidirectionnel. La raideur de la préforme selon la direction transversale T est ainsi augmentée dans cette deuxième zone 150.

La deuxième zone 150 peut s'étendre selon la direction longitudinale L sur une longueur L2 inférieure ou égale à 25% de la hauteur L0 de la préforme 100 mesurée selon la direction longitudinale L. Cette deuxième zone peut s'étendre dans une portion de la partie de pale 120 située entre 80% de la hauteur L0 de la préforme mesurée selon la direction longitudinale L et l'extrémité libre 121 de la préforme fibreuse.

La préforme 100 peut être tissée du pied 110 vers l'extrémité libre 121. Une fois que la première zone 140 a été tissée et avant de refermer les cavités 144 par un tissage tridimensionnel classique, on peut insérer le matériau de remplissage 145 dans les cavités 144, puis refermer les cavités 144 et continuer le tissage jusqu'à l'extrémité libre 121 de la préforme 100. En variante, il est possible de laisser accessibles les cavités 144 après avoir tissé l'ensemble de la préforme 100 en conservant deux portions déliées après la première zone 140, et d'insérer le matériau de remplissage 145 dans les cavités 144 en ouvrant la préforme 100 par l'extrémité libre 121.

De manière générale, les fibres de la préforme fibreuse 100 sont en un matériau choisi en fonction de l'application envisagée, par exemple en verre, en carbone ou en céramique.

La densification de la préforme fibreuse par une matrice pour obtenir une pièce en matériau composite est réalisée en maintenant la préforme dans un outillage de conformation au moins jusqu'à rigidification (ou consolidation) de la préforme.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique.

Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou un procédé de type RTM (« Resin Transfer Molding ») dans un moule adapté. Dans le cas d'une matrice en carbone ou en céramique, la densification pourra être réalisée par infiltration chimique en phase gazeuse, ou CVI (« Chemical Vapour Infiltration ») ou par imprégnation par une composition liquide contenant une résine précurseur de carbone ou de céramique et traitement thermique de pyrolyse ou céramisation du précurseur, ces procédés étant bien connus en soi.

## Revendications

1. Préforme fibreuse (100) destinée à former le renfort fibreux d'une aube (10) de soufflante (2) de turbomachine aéronautique (1) en matériau composite à renfort fibreux densifié par une matrice, la préforme fibreuse étant en une seule pièce et étant obtenue par tissage tridimensionnel d'une pluralité de fils ou torons longitudinaux (c₁-c₁₆) s'étendant dans une direction correspondant à la direction longitudinale (L) de l'aube avec une pluralité de fils ou torons transversaux (t₁-t₁₆), la préforme comprenant une partie de pied d'aube (110) et une partie de pale d'aube (120) s'étendant entre la partie de pied d'aube et une extrémité libre (121) de la préforme fibreuse,
**caractérisée en ce que** la partie de pale (120) de la préforme présente une première zone (140) qui comprend une première peau (141) correspondant à une face intrados de l'aube, une deuxième peau (142) correspondant à une face extrados de l'aube, et une portion de raidissement longitudinale (143) s'étendant entre la première peau (141) et la deuxième peau (142), et **en ce que**, dans un plan transversal de la première zone :
- des fils ou torons transversaux de la première peau (t₁-t₈) et de la deuxième peau (t₉-t₁₆) sont tissés par paires dans la première peau et dans la deuxième peau de part et d'autre de la portion de raidissement longitudinale,
- les fils ou torons d'au moins une première paire de fils ou torons transversaux (t₅-t₆, t₇-t₈) de la première peau sont séparés en deux fils ou torons unitaires au niveau de la portion de raidissement longitudinale, lesdits fils ou torons unitaires étant tissés séparément avec des fils ou torons longitudinaux dans ladite portion,
- les fils ou torons d'au moins une deuxième paire de fils ou torons transversaux (t₉-t₁₀, t₁₁-t₁₂) de la deuxième peau sont séparés en deux fils ou torons unitaires au niveau de la portion de raidissement longitudinale, lesdits fils ou torons unitaires étant tissés séparément avec des fils ou torons longitudinaux dans ladite portion, et
- au moins un fil ou toron (t₇, t₈) de la première paire et au moins un fil ou toron de la deuxième paire (t₉) se croisent au moins deux fois dans la portion de raidissement longitudinale.

2. Préforme fibreuse selon la revendication 1, dans laquelle la première zone (140) s'étend selon la direction longitudinale (L) sur une longueur (L1) inférieure ou égale à 75% de la hauteur (L0) de la préforme mesurée selon la direction longitudinale (L).

3. Préforme fibreuse selon la revendication 1 ou 2, dans laquelle la première zone (140) s'étend dans une portion de la partie de pale (120) située entre 50% de la hauteur de la préforme mesurée selon la direction longitudinale (L) et l'extrémité libre (121) de la préforme.

4. Préforme fibreuse selon l'une quelconque des revendications 1 à 3, dans laquelle au moins une partie des fils ou torons longitudinaux (c₅-c₁₂) présents dans la portion de raidissement longitudinale (143) présentent un titre supérieur au titre des fils ou torons longitudinaux (c₁-c₄, c₁₃-c₁₆) présents dans la première (141) et la deuxième peau (142).

5. Préforme fibreuse selon l'une quelconque des revendications 1 à 4, dans laquelle les fils ou torons longitudinaux (c₁-c₁₆) sont des fils ou torons de chaîne et les fils ou torons transversaux (t₁-t₁₆) sont des fils ou torons de trame.

6. Préforme fibreuse selon l'une quelconque des revendications 1 à 5, dans laquelle un matériau de remplissage (145) est présent entre la première peau (141) et la deuxième peau (142) dans la première zone (140).

7. Préforme fibreuse selon l'une quelconque des revendications 1 à 6, dans laquelle la partie de pale présente une deuxième zone (150) au voisinage de l'extrémité libre (121) de la préforme (100) comprenant une pluralité de couches de tissus unidirectionnels de fils ou torons transversaux (t₄-t₁₃).

8. Aube (10) de soufflante (2) de turbomachine aéronautique (1) en matériau composite à renfort fibreux densifié par une matrice comprenant une préforme fibreuse selon l'une quelconque des revendications 1 à 7 en tant que renfort fibreux, l'aube présentant une portion correspondant à la première zone (140) de la préforme fibreuse (100), ladite portion comprenant deux cavités (144) séparées par un élément de raidissement longitudinal correspondant à la portion de raidissement longitudinale (143) de la préforme.

9. Module de soufflante (2) de turbomachine aéronautique (1), comprenant un disque de soufflante (8) et une pluralité d'aubes (10) de soufflante selon la revendication 8 montées sur le disque de soufflante.

## Patentansprüche

1. Faser-Vorform (100), die dazu bestimmt ist, die Faserverstärkung einer Schaufel (10) für ein Gebläse (2) einer Flugzeug-Turbomaschine (1) zu bilden, aus Verbundmaterial mit einer durch eine Matrix verdichteten Faserverstärkung, wobei die Faser-Vorform ein einzelner Teil ist und durch dreidimensionale Verwebung von mehreren Längsfäden oder -litzen (c₁-c₁₆), die sich in einer Richtung entsprechend einer Längsrichtung (L) der Schaufel erstrecken, mit mehreren Querfäden oder -litzen (t₁-t₁₆) erhalten wird, wobei die Vorform einen Schaufelfußabschnitt (110) und einen Schaufelblattabschnitt (120) umfasst, der sich zwischen dem Schaufelfußabschnitt und einem freien Ende (121) der Faser-Vorform erstreckt,
**dadurch gekennzeichnet, dass** der Blattabschnitt (120) der Vorform eine erste Zone (140) aufweist, die eine erste Haut (141) entsprechend einer Druckseitenfläche der Schaufel, eine zweite Haut (142) entsprechend einer Saugseitenfläche der Schaufel, und eine Längsversteifungssektion (143) umfasst, die sich zwischen der ersten Haut (141) und der zweiten Haut (142) erstreckt, und dass, in einer Querebene der ersten Zone:
- die Querfäden oder -litzen der ersten Haut (t₁-t₈) und der zweiten Haut (t₉-t₁₆) auf beiden Seiten der Längsversteifungssektion in der ersten Haut und in der zweiten Haut paarweise verwebt sind,
- die Fäden oder Litzen von zumindest einem ersten Paar von Querfäden oder -litzen (t₅-t₆, t₇-t₈) der ersten Haut im Bereich der Längsversteifungssektion in zwei einzelne Fäden oder Litzen getrennt sind, wobei die einzelnen Fäden oder Litzen separat mit den Längsfäden oder -litzen in der Sektion verwebt sind,
- die Fäden oder Litzen von zumindest einem zweiten Paar von Querfäden oder -litzen (t₉-t₁₀, t₁₁-t₁₂) der zweiten Haut im Bereich der Längsversteifungssektion in zwei einzelne Fäden oder Litzen getrennt sind, wobei die einzelnen Fäden oder Litzen separat mit den Längsfäden oder -litzen in der Sektion verwebt sind, und
- zumindest ein Faden oder eine Litze (t₇, t₈) des ersten Paars und zumindest ein Faden oder eine Litze des zweiten Paars (t₉) sich in der Längsversteifungssektion zumindest zweimal kreuzen.

2. Faser-Vorform nach Anspruch 1, wobei die erste Zone (140) sich gemäß der Längsrichtung (L) über eine Länge (L1) kleiner oder gleich 75 % der Höhe (L0) der Vorform gemessen in der Längsrichtung (L) erstreckt.

3. Faser-Vorform nach Anspruch 1 oder 2, wobei die erste Zone (140) sich in einer Sektion des Blattabschnitts (120) erstreckt, die zwischen 50 % der Höhe der Vorform gemessen in der Längsrichtung (L) und dem freien Ende (121) der Vorform liegt.

4. Faser-Vorform nach einem der Ansprüche 1 bis 3, wobei zumindest ein Teil der Längsfäden oder -litzen (c₅-c₁₂), die in der Längsversteifungssektion (143) vorliegen, einen höheren Titer aufweist als den Titer der Längsfäden oder -litzen (c₁-c₄, c₁₃-c₁₆), die in der ersten (141) und der zweiten Haut (142) vorliegen.

5. Faser-Vorform nach einem der Ansprüche 1 bis 4, wobei die Längsfäden oder - litzen (c₁-c₁₆) Kettfäden oder -litzen sind und die Querfäden oder -litzen (t₁-t₁₆) Schussfäden oder -litzen sind.

6. Faser-Vorform nach einem der Ansprüche 1 bis 5, wobei ein Füllmaterial (145) zwischen der ersten Haut (141) und der zweiten Haut (142) in der ersten Zone (140) vorliegt.

7. Faser-Vorform nach einem der Ansprüche 1 bis 6, wobei der Blattabschnitt eine zweite Zone (150) in der Nachbarschaft des freien Endes (121) der Vorform (100) aufweist, die mehrere Schichten von unidirektionalen Geweben von Querfäden oder - litzen (t₄-t₁₃) umfasst.

8. Schaufel (10) für ein Gebläse (2) einer Flugzeug-Turbomaschine (1) aus Verbundmaterial mit einer durch eine Matrix verdichteten Faserverstärkung, umfassend eine Faser-Vorform nach einem der Ansprüche 1 bis 7 als Faserverstärkung, wobei die Schaufel eine Sektion entsprechend der ersten Zone (140) der Faser-Vorform (100) aufweist, wobei die Sektion zwei Hohlräume (144) umfasst, die durch ein Längsversteifungselement entsprechend der Längsversteifungssektion (143) der Vorform getrennt sind.

9. Gebläsemodul (2) einer Flugzeug-Turbomaschine (1), umfassend ein Gebläserad (8) und mehrere Gebläseschaufeln (10) nach Anspruch 8, die auf dem Gebläserad montiert sind.

## Claims

1. A fibrous preform (100) intended to form the fibrous reinforcement of a fan (2) blade (10) of an aircraft turbine engine (1), in composite material with fibrous reinforcement densified with a matrix, the fibrous preform being in a single piece and being obtained by three-dimensional weaving of a plurality of longitudinal yarns or strands (c₁-c₁₆), extending in a direction corresponding to the longitudinal direction (L) of the blade, with a plurality of transverse yarns or strands (t₁-t₁₆), the preform comprising a blade root part (110) and a blade airfoil part (120) extending between the blade root part and a free end (121) of the fibrous preform,
**characterized in that** the airfoil part (120) of the preform has a first area (140) comprising a first skin (141) corresponding to a lower surface of the blade, a second skin (142) corresponding to an upper surface of the blade, and a longitudinal stiffener portion (143) extending between the first skin (141) and the second skin (142), and **in that**, in a transverse plane of the first area;
- transverse yarns or strands of the first skin (t₁-t₈) and of the second skin (t₉-t₁₆) are woven in pairs in the first skin and in the second skin either side of the longitudinal stiffener portion;
- the yarns or strands of at least one first pair of transverse yarns or strands (t₅-t₆, t₇-t₈) of the first skin are separated into two unit yarns or strands at the longitudinal stiffener portion, said unit yarns or strands being woven separately with longitudinal yarns or strands in said portion;
- the yarns or strands of at least one second pair of transverse yarns or strands (t₉-t₁₀, t₁₁-t₁₂) of the second skin are separated into two unit yarns or strands at the longitudinal stiffener portion, said unit yarns or strands being woven separately with longitudinal yarns or strands in said portion; and
- at least one yarn or strand (t₇, t₈) of the first pair and at least one yarn or strand of the second pair (t₉) cross over each other at least twice in the longitudinal stiffener portion.

2. The fibrous preform according to claim 1, wherein the first area (140) extends in the longitudinal direction (L) over a length (L1) less than or equal to 75% of the height (L0) of the preform measured in the longitudinal direction (L).

3. The fibrous preform according to claim 1 or 2, wherein the first area (140) extends into a portion of the airfoil part (120) located at between 50% of the height of the preform measured in the longitudinal direction (L) and the free end (121) of the preform.

4. The fibrous preform according to any of claims 1 to 3, wherein at least some of the longitudinal yarns or strands (c₅-c₁₂) contained in the longitudinal stiffener portion (143) have a higher yarn count than the yarn count of the longitudinal yarns or strands (c₁-c₄, c₁₃-c₁₆) contained in the first (141) and the second skin (142).

5. The fibrous preform according to any of claims 1 to 4, wherein the longitudinal yarns or strands (c₁-c₁₆) are warp yarns or strands and the transverse yarns or strands (t₁-t₁₆) are weft yarns or strands.

6. The fibrous preform according to any of claims 1 to 5, wherein a filler material (145) is present between the first skin (141) and the second skin (142) in the first area (140).

7. The fibrous preform according to any of claims 1 to 6, wherein the airfoil part has a second area (150) in the vicinity of the free end (121) of the preform (100) comprising a plurality of layers of unidirectional fabrics of transverse yarns or strands (t₄-t₁₃).

8. A fan (2) blade (10) of an aircraft turbine engine (1), in composite material with fibrous reinforcement densified with a matrix comprising a fibrous preform according to any of claims 1 to 7 as fibrous reinforcement, the blade having a portion corresponding to the first area (140) of the fibrous preform (100), said portion comprising two cavities (144) separated by a longitudinal stiffener element corresponding to the longitudinal stiffener portion (143) of the preform.

9. A fan module (2) of aircraft turbine engine (1), comprising a fan disk (8) and a plurality of fan blades (10) according to claim 8 mounted on the fan disk.
